# FASCICULE DE BREVET EUROPEEN

(11) **EP 3 853 295 B1**
(45) Date de publication et mention de la délivrance du brevet: **28.10.2026**
(21) Numéro de dépôt: 19790667.0
(22) Date de dépôt: 18.09.2019
(51) Int. Cl.: C08J 3/20, H01M 8/0221, H01M 8/0226, C08K 3/013, H01B 1/24, H01M 8/0213, C08K 3/04, C08K 7/06

(54) **COMPOSITIONS POUR PLAQUES BIPOLAIRES ET METHODES DE FABRICATION DE CES COMPOSITIONS**
ZUSAMMENSETZUNGEN FÜR BIPOLARE PLATTEN UND VERFAHREN ZUR HERSTELLUNG DIESER ZUSAMMENSETZUNGEN
COMPOSITIONS FOR BIPOLAR PLATES AND PROCESSES FOR MANUFACTURING SAID COMPOSITIONS

(30) Priorité: 21.09.2018 FR 1858597
(43) Date de publication de la demande: 28.07.2021
(73) Titulaire: ARKEMA FRANCE, 92800 Puteaux (FR)
(72) Inventeur: BIZET, Stéphane, 27470 SERQUIGNY (FR); CHAUVEAU, Jérôme, 27470 SERQUIGNY (FR)
(74) Mandataire: Arkema Patent
(86) Numéro de dépôt international: PCT/FR2019/052174
(87) Numéro de publication internationale: WO 2020/058626

(56) Documents cités:
- CN-A- 104 269 558
- CN-A- 107 046 140
- KR-B1- 100 660 144
- US-A1- 2004 028 993
- US-A1- 2014 001 416
- US-A1- 2018 030 277

## Description

### DOMAINE TECHNIQUE

La présente invention concerne de nouvelles compositions pour plaques bipolaires, les procédés de fabrications de ces compositions, les plaques bipolaires obtenues à partir de ces compositions et les procédés de fabrication par injection de ces plaques, tels que définis dans le jeu de revendications joint.

### CONTEXTE TECHNIQUE

Les plaques bipolaires sont utilisées dans les piles à combustible et dans les batteries à flux redox. Elles peuvent être réalisées à partir de différents matériaux : plaques bipolaires métalliques, plaques en graphite et plaques en composites carbone - polymère.

Le principe des plaques bipolaires à base de matériaux composites organiques repose sur l'utilisation de charges conductrices (carbone, graphite,...) dispersées dans un polymère thermoplastique ou thermodurcissable. Les charges vont conférer aux plaques bipolaires la conductivité électrique nécessaire à la collecte du courant et la matrice polymère leur bonne tenue mécanique nécessaire à l'assemblage des différents éléments.

Les plaques bipolaires composites carbone-polymère présentent des propriétés intéressantes : une haute conductivité électrique, une bonne résistance à la corrosion, de bonnes performances à haute température, et de bonnes propriétés mécaniques, avec un coût de fabrication relativement faible. Dans ces plaques bipolaires composites, un polymère thermodurcissable ou thermoplastique est utilisé comme matrice pour une charge carbonée choisie parmi le graphite, les fibres de carbone, le noir de carbone ou les nanotubes de carbone. Bien que la performance électrique des plaques bipolaires composites est principalement déterminée par la charge carbonée, le matériau de la matrice polymère influence également le comportement électrique du composite.

Le document US 2004/028993 décrit un procédé de fabrication d'un matériau composite conducteur qui comprend les étapes suivantes: l'obtention d'un mélange comprenant de 10 à 40% en volume d'un liant organique sous forme de poudre ou de granulés, de 40 à 90% en volume d'un premier type de graphite lamellaire constitué de lamelles de granulométrie comprise entre 10 et 100 pm et/ou un deuxième type de graphite lamellaire constitué d'agglomérats de particules de graphite liées et superposées entre elles de façon que leurs plans principaux soient parallèles entre eux, ces agglomérats présentant une anisotropie planaire et ayant entre pm et 1 mm de côté et entre 5 et 50 pm d'épaisseur, et jusqu'à 25% en volume de fibres conductrices d'une longueur comprise entre 0,5 et 10 mm ; le malaxage ou l'extrusion du mélange obtenu à une température supérieure à la température de fusion du liant organique et permettant d'obtenir une pâte à partir dudit mélange, le transfert de la pâte dans un moule porté à une température inférieure à la température de fusion du liant organique ; et la compression de la pâte contenue dans le moule pour obtenir ledit matériau composite conducteur.

Les composites polymères thermodurcissables - graphite sont des matériaux préférés pour la fabrication de plaques bipolaires. Cependant, des matériaux composites à base de polymères thermoplastiques, notamment des thermoplastiques stables aux températures élevées, ont déjà été utilisés dans la fabrication de plaques bipolaires, en raison de leur aptitude d'être moulés par injection, ce qui les rend plus aptes à la fabrication automatisée. De tels composites ont été préparés en utilisant du sulfure de polyphénylène (PPS) ou du polyéther sulfone (PES) contenant de la poudre de graphite, comme rapporté par Radhakrishnan, S. et al. dans la publication : « High-temperature, Polymer-graphite Hybrid Composites for Bipolar Plates: Effect of Processing Conditions on Electrical Properties », Journal of Power Sources, 2006, Vol. 163, pp. 702-707.

La publication de Mighri F. et al. "Electrically conductive thermoplastic blends for injection and compression molding of bipolar plates in the fuel cell application", Polymer Engineering and Science, 2004, vol 44, n°9 décrit des plaques bipolaires faites par les procédés de compression et d'injection à partir de graphite, de noir de carbone et de polypropylène ou polysulfure de phénylène.

Parmi ces deux principaux procédés de fabrication des plaques bipolaires composites graphite/polymère, le procédé d'injection est celui qui permet de diminuer les temps de cycle de fabrication. Il ouvre ainsi des perspectives de réduction de coût significative. Cependant, par rapport à la compression, celui-ci présente quelques inconvénients. Notamment, compte tenu des taux élevés de charge, la formulation est très visqueuse et devient difficile à fabriquer par le procédé d'injection. Pour pouvoir conserver une bonne faculté de mise en œuvre, le taux de polymère utilisé est généralement augmenté par rapport au procédé de compression. L'utilisation de taux plus élevés de liant polymère a pour contrepartie de diminuer la conductivité des plaques. Tout l'enjeu consiste donc à trouver le meilleur compromis entre viscosité de la formulation et la conductivité de la plaque. De plus, dans ce genre de procédé, il est fréquent que la surface de la plaque soit enrichie en polymère du fait d'une migration préférentielle vers la surface. Ceci a pour conséquence de diminuer la conductivité de surface et de devoir avoir recours à une étape supplémentaire de traitement de la surface pour enlever cette couche mois conductrice.

Il existe un besoin de fournir une composition, permettant de fabriquer par injection des plaques bipolaires, dont la viscosité est adaptée au procédé d'injection de la plaque bipolaire.

### RÉSUMÉ DE L'INVENTION

Selon un premier aspect, l'invention concerne la fabrication d'une composition comprenant les étapes suivantes:
- mélanger un polymère thermoplastique fluoré à l'état fondu avec une première charge conductrice afin d'obtenir un polymère fluoré conducteur, dans lequel la première charge conductrice constitue de 0,1% à 20% basé sur le poids du polymère thermoplastique conducteur, ce dernier étant un polymère fluoré dont un filament, produit à l'aide d'un rhéomètre capillaire, a une résistance inférieure à 10⁶ Ohm;
- broyer ledit polymère fluoré conducteur pour le réduire en poudre;
- mélanger la poudre de polymère fluoré conducteur avec une seconde charge conductrice, le polymère fluoré conducteur étant présent en une quantité allant de 10% à 70%, et la seconde charge conductrice étant présente en une quantité allant de 30% à 90%, basé sur le poids total de la composition.

Selon un mode de réalisation, la seconde charge conductrice est le graphite.

Selon un mode de réalisation, la première charge conductrice est choisie parmi : les polymères conducteurs électroniques, les charges dérivées du carbone comme le graphite, les fibres de carbone, les nanotubes de carbone, les noirs de carbone, le graphène et leurs mélanges, de préférence la première charge conductrice étant le noir de carbone.

L'invention concerne en outre une composition obtenue par le procédé décrit ci-dessus.

L'invention concerne également une composition comprenant une seconde charge conductrice et des particules d'un polymère fluoré conducteur. De manière caractéristique, les particules du polymère fluoré conducteur comprennent une matrice de polymère fluoré dans laquelle est dispersée une première charge conductrice.

Selon un mode de réalisation, dans la composition selon l'invention, le polymère fluoré conducteur est présent en une quantité allant de 10 à 40%, avantageusement de 15 à 30%, et la seconde charge conductrice est présente en une quantité allant de 60 à 90%, avantageusement de 70 à 85% basé sur le poids total de la composition.

Selon un mode de réalisation, dans la composition de polymère fluoré conducteur, la première charge conductrice est présente en une quantité de 0,1% à 10%, avantageusement de 0,25% à 8% basé sur le poids total de cette composition.

L'invention concerne selon un autre aspect un procédé de fabrication d'une plaque bipolaire, comprenant les étapes suivantes:
- préparer une composition selon le procédé décrit ci-dessus, ou fournir une composition telle que décrite ci-dessus, et
- soumettre ladite composition à un moulage par injection.

L'invention concerne en outre une plaque bipolaire obtenue par le procédé décrit ci-dessus ou comprenant la composition décrite ci-dessus.

La présente invention permet de surmonter les inconvénients de l'état de l'art. Elle fournit plus particulièrement des compositions pouvant être mises en œuvre facilement pour fabriquer des plaques bipolaires qui ne présentent pas de domaine isolant, ce qui se traduit par une conductivité améliorée par rapport à une composition de plaque polymère fluoré non conducteur PVDF + graphite.

Cela est réalisé grâce à l'utilisation d'un liant comprenant un polymère fluoré dans lequel est dispersée une charge conductrice. L'utilisation d'un liant conducteur électrique ainsi obtenu a plusieurs avantages. D'une part, l'utilisation d'un liant conducteur permet de réduire la résistivité des plaques en réduisant, voire supprimant, les domaines isolants électriques de polymère entre les particules de la charge majoritaire de la plaque. D'autre part, cela permet d'éviter le traitement subséquent des surfaces des plaques bipolaires, par exemple par sablage, qui est souvent exigé suite à la fabrication par moulage par injection des plaques, afin d'éliminer la couche de polymère isolant lorsque le liant consiste en un polymère thermoplastique seul.

L'invention fournit également un procédé pour préparer les compositions présentant les avantages susmentionnés. Le fait de mélanger un polymère fluoré à l'état fondu avec une première charge conductrice, puis d'incorporer audit mélange une seconde charge conductrice, dans une étape distincte, permet d'obtenir une composition pour plaque bipolaire composite dans laquelle le liant comprend un polymère fluoré conducteur, autrement dit un polymère fluoré dans lequel une première charge conductrice est dispersée. Ensuite, le polymère fluoré conducteur peut être mis en œuvre facilement.

### DESCRIPTION DE MODES DE RÉALISATION DE L'INVENTION

L'invention est décrite de manière détaillée ci-après.

Les pourcentages indiqués dans le texte sont des pourcentages massiques.

### Composition pour plaque bipolaire

Selon un premier aspect, l'invention concerne une composition apte à être utilisée dans la fabrication de plaques bipolaires. La composition comprend un mélange de particules d'une charge conductrice à base de carbone, désigné ici comme « seconde charge conductrice », et des particules d'un polymère fluoré conducteur, qui comprennent une charge conductrice (désignée ici comme « première charge conductrice ») dispersée dans une matrice de polymère thermoplastique.

Selon diverses réalisations, ladite composition comprend les caractères suivants, le cas échéant combinés.

La composition peut être sous forme de poudre et, dans ce cas, les particules de polymère fluoré conducteur sont mélangées aux particules de la seconde charge conductrice.

Selon un autre mode de réalisation, la composition peut être sous une forme solide agglomérée, et, dans ce cas, les particules de la seconde charge conductrice sont liées aux particules (ou domaines) de polymère fluoré conducteur. C'est sous cette forme agglomérée que la composition est façonnée en une plaque bipolaire.

La dispersion de la première charge conductrice dans le polymère fluoré a pour effet de rendre celui-ci conducteur. Un polymère fluoré est considéré comme conducteur lorsque la résistance d'un filament de ce polymère, produit à l'aide d'un rhéomètre capillaire par exemple, est inférieure à 10⁶ Ohm. De préférence, le chargement de la première charge conductrice est tel que le seuil de percolation à travers la matrice de polymère fluoré est atteint.

De préférence, la seconde charge conductrice et la première charge conductrice dispersée dans le polymère fluoré sont différentes l'une de l'autre en ce qui concerne leur taille moyenne ou leur répartition des tailles et/ou leur nature.

Avantageusement, la seconde charge conductrice est le graphite.

Le diamètre moyen en volume (Dv50) de la seconde charge conductrice peut être égal ou inférieur à 2500 µm, de préférence égal ou inférieur à 1000 µm, et plus préférablement égal ou inférieur à 500 µm.

Selon certains modes de réalisation, le Dv50 de la seconde charge conductrice varie de 10 µm à 50 µm, ou de 50 à 100 µm, ou de 100 à 150 µm, ou de 150 à 200 µm, ou de 200 à 250 µm, ou de 250 à 300 µm, ou de 300 to 350 µm, ou de 350 à 400 µm, ou de 400 à 450 µm, ou de 450 à 500 µm, ou de 500 à 600 µm, ou de 600 à 700 µm, ou de 700 à 800 µm, ou de 800 à 900 µm, ou de 900 à 1000 µm, ou de 1000 à 1100 µm, ou de 1100 à 1200 µm, ou de 1200 à 1300 µm, ou de 1300 à 1400 µm, ou de 1400 à 1500 µm, ou de 1500 à 1600 µm, ou de 1600 à 1700 µm, ou de 1700 à 1800 µm, ou de 1900 à 2000 µm, ou de 2000 à 2100 µm, ou de 2100 à 2200 µm, ou de 2200 à 2300 µm, ou de 2300 à 2400 µm, ou de 2400 à 2500 µm.

Le Dv50 est le diamètre des particules au cinquantième percentile de la distribution des tailles cumulative des particules. Ce paramètre peut être mesuré par granulométrie laser.

La composition comprend de 30 à 90% en poids d'une seconde charge conductrice, basé sur le poids total de la composition. Selon certains modes de réalisation, la composition comprend, en poids, de 30 à 45%, ou de 35 à 40%, ou de 40 à 45%, ou de 45 à 50%, ou de 50 à 55%, ou de 55 à 60%, ou de 60 à 65%, ou de 65 à 70%, ou de 70 à 75%, ou de 75 à 80%, ou de 80 à 85%, ou de 85 à 90%, d'une seconde charge conductrice, basé sur le poids total de la composition.

Les particules de polymère fluoré conducteur peuvent avoir un Dv50 allant de 0,1 µm à 1 mm, plus particulièrement de 0,1 µm à 5 µm, ou de 5 µm à 50 µm, ou de 50 µm à 100 µm, ou de 100 µm à 200 µm, ou de 200 µm à 300 µm, ou de 300 µm à 400 µm, ou de 400 µm à 500 µm, ou de 500 µm à 600 µm, ou de 600 µm à 700 µm, ou de700 µm à 800 µm, ou de800 µm à 900 µm, ou de 900 µm à 1 mm.

La première charge conductrice dispersée dans le polymère fluoré conducteur peut être un polymère conducteur électronique. Des polymères conducteurs électroniques qui conviennent à cet effet sont les polymères de polyacétylène, polyphénylène vinylène, polythiophène, polyaniline, polypyrrole, poly(sulfure de phénylène) ou leurs mélanges. Selon une autre variante de réalisation, ou en addition, la première charge conductrice peut comprendre des particules de carbone électriquement conductrices, telles que le noir de carbone, les nanotubes de carbone, le graphène, le graphite, les fibres de carbone ou un mélange de deux types de particules parmi cette liste.

La première charge conductrice dispersée dans la matrice de polymère fluoré peut avoir une surface spécifique mesurée par l'adsorption de l'azote par la méthode BET selon la norme ASTM D3037 allant de 0,1 m²/g à 2000 m²/g et de préférence de 10 m² à 1000 m²/g.

Selon certains modes de réalisation, première charge conductrice peut avoir une surface spécifique BET allant de 0,1 à 1 m²/g, ou de 1 à 10 m²/g, ou de 10 à 50 m²/g, ou de 10 à 50 m²/g, ou de 50 à 200 m²/g, ou de 200 à 400 m²/g, ou de 400 à 600 m²/g, ou de 600 à 800 m²/g, ou de 800 à 1000 m²/g, ou de 1000 à 1200 m²/g, ou de 1200 à 1400 m²/g, ou de 1400 à 1600 m²/g, ou de 1600 à 1800 m²/g, ou de 1800 à 2000 m²/g.

Le polymère fluoré contient dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

Selon un mode de réalisation, ce monomère peut être le fluorure de vinyle, le fluorure de vinylidène, le trifluoroéthylène, le chlorotrifluoroéthylène, le 1,2-difluoroéthylène, le tétrafluoroéthylène, l'hexafluoropropylène ; des perfluoro(alkyl vinyl) éthers tels que perfluoro(méthyl vinyl)éther, perfluoro(éthyl vinyl) éther or perfluoro(propyl vinyl) éther; perfluoro(1,3-dioxole), perfluoro(2,2-diméthyl-1,3-dioxole) ; le produit de formule CF₂=CFOCF₂CF(CF₃)OCF₂CF₂X dans lequelle X est SO₂F, CO₂H, CH₂OH, CH₂OCN ou CH₂OPO₃H; le produit de formule CF₂=CFOCF₂CF₂SO₂F, le produit de formule F(CF₂)ₙCH₂OCF=CF₂ dans laquelle n est 1, 2, 3, 4 ou 5; le produit de formule RiCH₂OCF=CF₂ dans laquelle R₁ est hydrogène ou F(CF₂)ₘ et m est 1, 2, 3 ou 4; le produit de formule R₂OCF=CH₂ dans laquelle R₂ est F(CF₂)ₚ et p est 1, 2, 3 ou 4; perfluorobutyl éthylène; 3,3,3-trifluoropropène ou 2-trifluorométhyl-3,3,3-trifluoro-1-propène.

Le polymère fluoré peut être un homopolymère ou un copolymère. Le copolymère peut également comprendre des monomères non-fluorés tel que l'éthylène.

Selon un mode de réalisation, le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère copolymérisable avec le fluorure de vinylidène.

Le polymère fluoré est de préférence l'homopolymère de fluorure de vinylidène.

Selon un mode de réalisation, le polymère fluoré est un copolymère comprenant des unités de fluorure de vinylidène (VDF) et des unités issues d'un ou plusieurs monomères. Ces autres monomères sont choisis dans la liste : fluorure de vinyle; trifluoroéthylène; chlorotrifluoroéthylène, 1,2-difluoroéthylène, tétrafluoroéthylène, hexafluoropropylène; perfluoro(alkyl vinyl)éthers tels que le perfluoro(méthyl vinyl)éther, perfluoro(éthyl vinyl)éther ou perfluoro(propyl vinyl)éther; perfluoro(1,3-dioxole); perfluoro(2,2-diméthyl-1,3-dioxole); le produit de formule CF₂=CFOCF₂CF(CF₃)OCF₂CF₂X dans laquelle X est SO₂F, CO₂H, CH₂OH, CH₂OCN ou CH₂OPO₃H; le produit de formule CF₂=CFOCF₂CF₂SO₂F, le produit de formule F(CF₂)ₙCH₂OCF=CF₂ dans laquelle n est 1, 2, 3, 4 ou 5; le produit de formule R'CH₂OCF=CF₂ dans laquelle R' est hydrogène ou F(CF₂)_{z} et z est 1, 2, 3 ou 4; le produit de formule R"OCF=CH₂ dans laquelle R" est F(CF₂)_{z} et z est 1, 2, 3 ou 4; perfluorobutyléthylène; 3,3,3-trifluoropropène ou 2-trifluorométhyl-3,3,3-trifluoro-1-propène.

Parmi ces comonomères du VDF, l'hexafluoropropylène est préféré. Les copolymères de VDF peuvent également comprendre des monomères non-fluorés tel que l'éthylène.

Dans les copolymères de VDF, le taux massique des unités VDF est d'au moins 50%, de préférence au moins 60%, plus préférablement supérieur à 70% et avantageusement supérieur à 80%.

Le polymère fluoré peut être un mélange d'un ou plusieurs polymères décrits ci-dessus.

Selon un mode de réalisation, dans la composition selon l'invention, le polymère fluoré conducteur est présent en une quantité allant de 10 à 40%, avantageusement de 15 à 30%, basé sur le poids total de la composition.

Selon un mode de réalisation, le polymère fluoré présente une viscosité inférieure ou égale à 1500 Pa.s, de préférence inférieure ou égale à 1000 Pa.s, à une température de 230°C et à un taux de cisaillement de 100 s⁻¹. La viscosité est mesurée à 230°C, à un taux de cisaillement de 100 s⁻¹ à l'aide d'un rhéomètre capillaire ou d'un rhéomètre à plaques parallèles, selon la norme ASTM D3825.

### Plaque bipolaire

L'invention concerne également une plaque bipolaire comprenant la composition décrite ci-dessus, sous une forme agglomérée. Une plaque bipolaire est une plaque sui sépare les cellules élémentaires dans les piles à combustible et les batteries à flux redox. En général, elle a une forme de parallélépipède ayant une épaisseur de quelques millimètres (typiquement comprise entre 0,2 et 6 mm) et comprend sur chaque face un réseau de canaux pour la circulation des gaz et des fluides. Ses fonctions consistent à alimenter la pile à combustible avec du carburant gazeux, à évacuer les produits de réaction et à collecter le courent électrique produit par la cellule.

### Procédés

Selon un autre aspect, l'invention concerne un procédé de fabrication de la composition décrite ci-dessus comprenant les étapes définies dans la revendication 1.

Dans ce procédé, la première charge conductrice, le polymère fluoré et la seconde charge conductrice peuvent avoir n'importe quelle caractéristique décrite ci-dessus comme étant optionnelle ou préférée, en rapport avec la composition pour plaque bipolaire.

Le procédé selon l'invention comprend une étape de mélange à l'état fondu du polymère fluoré avec la première charge conductrice afin d'obtenir le polymère fluoré conducteur. Cette étape permet de formuler un mélange intime du polymère fluoré avec la première charge conductrice, mélange appelé « le polymère fluoré conducteur ». De préférence, ladite première charge conductrice est dispersée dans le polymère fluoré.

De préférence, le polymère et la première charge conductrice à mélanger à l'état fondu sont sous forme de poudre.

La première charge conductrice dispersée dans la matrice de polymère fluoré peut avoir une surface spécifique mesurée par l'adsorption de l'azote par la méthode BET selon la norme ASTM D3037 allant de 0,1 m²/g à 2000 m²/g et de préférence de 10 m² à 1000 m²/g. Selon certains modes de réalisation, première charge conductrice peut avoir une surface spécifique BET allant de 0,1 à 1 m²/g, ou de 1 à 10 m²/g, ou de 10 à 50 m²/g, ou de 10 à 50 m²/g, ou de 50 à 200 m²/g, ou de 200 à 400 m²/g, ou de 400 à 600 m²/g, ou de 600 à 800 m²/g, ou de 800 à 1000 m²/g, ou de 1000 à 1200 m²/g, ou de 1200 à 1400 m²/g, ou de 1400 à 1600 m²/g, ou de 1600 à 1800 m²/g, ou de 1800 à 2000 m²/g.

Selon un mode de réalisation, l'étape de mélange à l'état fondu est réalisée par extrusion, en utilisant par exemple un malaxeur ou une extrudeuse à deux vis. Afin d'obtenir une bonne dispersion des premières charges conductrices à l'intérieur du polymère fluoré un profil de vis, conduisant au mélange dispersif grâce à un taux de cisaillement élevé, sera préféré.

Selon un mode de réalisation, dans un procédé d'extrusion classique pour mélanger à l'état fondu un polymère fluoré avec la première charge conductrice, les granulés de polymère sont fondus en les transportant le long de la vis qui est chauffée jusqu'à des températures allant de Tm +20 à Tm+70 °C (Tm étant la température de fusion du polymère fluoré). La charge conductrice est alimentée de préférence au moyen d'une unité de dosage. De préférence, après l'extrusion, les granulés sont obtenus par un procédé de découpe de filaments ou par granulation sous eau.

Le polymère fluoré contient de 0,1 à 20%, en poids, de première charge conductrice, et peut donc contenir, en poids, de 0,1% à 1%, ou de 1% à 2,5%, ou de 2,5% à 5%, ou de 5% à 10%, ou de 10% à 15%, ou de 15% à 20% de première charge conductrice, basé sur le poids du polymère fluoré conducteur.

Le polymère fluoré conducteur peut être produit sous forme de granulés.

Le procédé selon l'invention comprend en outre une étape de broyage dudit polymère fluoré conducteur pour le réduire en poudre. Tout moyen de broyage peut être employé, par exemple un broyeur à marteau. Selon certains modes de réalisation, la poudre de polymère fluoré conducteur peut avoir une Dv50 allant de 0,1 µm à 1 mm, plus particulièrement de 0,1 µm à 5 µm, ou de 5 µm à 50 µm, ou de 50 µm à 100 µm, ou de 100 µm à 200 µm, ou de 200 µm à 300 µm, ou de 300 µm à 400 µm, ou de 400 µm à 500 µm, ou de 500 µm à 600 µm, ou de 600 µm à 700 µm, ou de700 µm à 800 µm, ou de800 µm à 900 µm, ou de 900 µm à 1 mm.

La poudre de polymère fluoré conducteur est ensuite mélangée avec la seconde charge conductrice.

La seconde charge conductrice peut être sous forme de poudre. Le diamètre moyen en volume (Dv50) de la seconde charge conductrice peut être égal ou inférieur à 2500 µm, de préférence égal ou inférieur à 1000 µm, et plus préférablement égal ou inférieur à 500 µm.

Selon certains modes de réalisation, le Dv50 de la seconde charge conductrice varie de 10 µm à 50 µm, ou de 50 à 100 µm, ou de 100 à 150 µm, ou de 150 à 200 µm, ou de 200 à 250 µm, ou de 250 à 300 µm, ou de 300 to 350 µm, ou de 350 à 400 µm, ou de 400 à 450 µm, ou de 450 à 500 µm, ou de 500 à 600 µm, ou de 600 à 700 µm, ou de 700 à 800 µm, ou de 800 à 900 µm, ou de 900 à 1000 µm, ou de 1000 à 1100 µm, ou de 1100 à 1200 µm, ou de 1200 à 1300 µm, ou de 1300 à 1400 µm, ou de 1400 à 1500 µm, ou de 1500 à 1600 µm, ou de 1600 à 1700 µm, ou de 1700 à 1800 µm, ou de 1900 à 2000 µm, ou de 2000 à 2100 µm, ou de 2100 à 2200 µm, ou de 2200 à 2300 µm, ou de 2300 à 2400 µm, ou de 2400 à 2500 µm.

L'étape de mélange peut être effectuée en incorporant la seconde charge conductrice dans la poudre de polymère fluoré conducteur. Avantageusement, cette étape peut être réalisée par compoundage dans une extrudeuse, par exemple dans une extrudeuse bi-vis.

Selon un mode de réalisation, le polymère fluoré conducteur est présent en une quantité allant de 10 à 40%, avantageusement de 15 à 30%, basé sur le poids total de la composition. Le polymère fluoré conducteur est de préférence présent dans une proportion massique allant de 10% à 15%, ou de 15% à 20%, ou de 20% à 25%, ou de 25% à 30%, ou de 30% à 35%, ou de 35% à 40%, basé sur le poids total de la composition de plaque bipolaire.

La seconde charge conductrice peut être présente dans une proportion massique de 40 à 45%, ou de 45 à 50%, ou de 50 à 55%, ou de 55 à 60%, ou de 60 à 65%, ou de 65 à 70%, ou de 70 à 75%, ou de 75 à 80%, ou de 80 à 85%, ou de 85 à 90%, basé sur le poids total de la composition de plaque bipolaire.

L'invention concerne également une composition de plaque bipolaire fabriquée au moyen du procédé décrit ci-dessus.

Selon un autre aspect, l'invention a trait à un procédé de fabrication d'une plaque bipolaire comprenant les étapes suivantes:
- préparer une composition selon le procédé décrit ci-dessus ;
- soumettre la composition à un moulage par injection.

De préférence, la composition pour plaque bipolaire est soumise à un moulage par injection sous forme de poudre.

Le procédé selon l'invention peut comprendre en outre une étape supplémentaire de broyage de cette poudre, par exemple au moyen d'un broyeur à disques.

Les compositions de l'invention sont particulièrement bien adaptées à la fabrication de plaques bipolaires composites par le procédé de moulage par injection. Le procédé de moulage par injection consiste en plusieurs étapes. Tout d'abord, des granulés ou poudres de polymère ou de mélange polymère/charge sont introduits dans une extrudeuse via une trémie d'alimentation. Une fois introduite, la matière est acheminée dans le fourreau où elle est simultanément chauffée, cisaillée et convoyée vers le moule par la vis d'extrusion. La matière est maintenue momentanément dans le fourreau et mise sous pression avant la phase d'injection. Lorsque la pression adéquate est atteinte, la matière est injectée dans un moule ayant la forme et les dimensions de l'objet final souhaité, la température du moule étant régulée. La durée du cycle dépend de la taille des pièces et du temps de solidification du polymère. Le maintien sous pression de la matière une fois injectée dans le moule limite la déformation et le retrait après démoulage. Pour éjecter les pièces, les parties du moule se séparent, le noyau se rétracte et les éjecteurs sont poussés pour décoller les pièces de la surface du moule.

Les paramètres du procédé d'injection sont multiples : température de la matière lors de l'étape de plastification, vitesse d'injection, pression d'injection de la matière, temps et pression de maintien dans le moule, température du moule.

Dans le cas de l'injection de plaques bipolaires composites de l'invention, le profil de température appliqué le long de la vis d'extrusion peut varier de 100°C à 280°C depuis la zone d'alimentation jusqu'à la tête d'injection. La température du moule peut varier de la température ambiante jusqu'à 280°C. Plusieurs procédés de refroidissement du moule peuvent être utilisés. La matière peut être injectée dans un moule maintenu à une température comprise entre les températures de fusion et de transition vitreuse pour un polymère semi-cristallin. Dans le cas d'un homopolymère de polyfluorure de vinylidène, la température du moule d'injection est typiquement comprise entre 40°C et 140°C. Par ailleurs, il existe des procédés d'injection pour lesquels la température du moule varie au cours du cycle d'injection. Dans ce type de procédé, la matière est tout d'abord injectée dans un moule dont la température est supérieure à la température de fusion pour un polymère thermoplastique semi-cristallin. Cette phase favorise le remplissage du moule. Dans le cas d'un homopolymère de polyfluorure de vinylidène, la température du moule d'injection lors de cette première phase est typiquement comprise entre 170°C et 280°C. Ensuite, le moule est refroidi jusqu'à une température comprise entre les températures de fusion et de transition vitreuse pour un polymère semi-cristallin afin de favoriser la cristallisation. La température du moule d'injection lors de cette deuxième phase est typiquement comprise entre 40°C et 140°C pour un homopolymère de polyfluorure de vinylidène, Des versions commerciales de ces procédés à température de moule variable existent. On peut citer par exemple les technologies Roctool, Variotherm et Variomelt.

Les autres paramètres d'injection tels que vitesse d'injection, pression d'injection de la matière, temps et pression de maintien dans le moule dépendent de la géométrie du moule, de ses dimensions, de la taille et position des seuils d'injection.

### EXAMPLES

### Produits :

PVDF1 : Homopolymère de fluorure de vinylidène commercialisé par Arkema et caractérisé par une viscosité mesurée en rhéométrie capillaire de 300 Pa.s à 100s⁻¹ et 230°C.

PVDF2 : Homopolymère de fluorure de vinylidène caractérisé par une viscosité mesurée en rhéométrie capillaire de 60 Pa.s à 100s⁻¹ et 230°C.

PVDF3 : Homopolymère de fluorure de vinylidène caractérisé par une viscosité mesurée en rhéométrie capillaire de 2000 Pa.s à 100s⁻¹ et 230°C.

Noir de carbone: Noir de carbone conducteur commercialisé par la société Imerys sous le nom Ensaco^{®} 260G qui possède une surface spécifique de 70 m²/g.

Graphite : Grade 70200 de la société Richard Anton.

### Réalisation des formulations PVDF conductrices

Les mélanges PVDF et noir de carbone ont été réalisés par le procédé d'extrusion à l'aide d'un co-malaxeur BUSS 15D. Les formulations ont été faites avec un débit de 15kg/h, une vitesse vis de 285 tour/minute et une température de 220°C.

Les granulés de PVDF conducteur obtenus à l'issue de l'étape d'extrusion sont cryo-broyés à l'aide d'un broyeur à marteau Mikropull 2DH de façon à obtenir une taille de particule moyenne définie par un Dv50 de 350 µm.

### Réalisation des mélanges PVDF conducteur/graphite

Le graphite et la poudre de PVDF conducteur sont mélangés par mélange à sec. Le mélange de poudre subit une étape supplémentaire d'homogénéisation dans un mélangeur interne de type Brabender. La poudre est introduite dans la chambre de malaxage dont la température est fixée à 240°C. La vitesse des pales est de 80 tours/minute. La durée du mélange est fixée à 15 minutes.

### Mise en forme des mélanges PVDF conducteur/graphite

Un rhéomètre capillaire de type Rhéo-tester 2000 de chez Göttfert a été utilisé pour évaluer l'aptitude à l'injection des formulations PVDF conducteur/graphite et produire des joncs dont la résistance électrique a été mesurée. La température est fixée à 250°C avec un temps de préchauffage de 5 minutes. Le rhéomètre est équipé d'une filière de 3mm de diamètre et 30 mm de longueur et d'un capteur de pression de 1400 bar (référencé 131055).

### Mesure des propriétés électriques

La résistance de chaque formulation a été mesurée sur un jonc produit lors d'un essai de rhéométrie capillaire à un gradient de cisaillement fixé. La mesure a été faite avec une méthode 4-pointes. Les essais ont été réalisés avec un résistivimètre Sefelec M1500P, utilisé comme source d'alimentation. Quatre marques à la laque d'argent sont réalisées sur les joncs aux emplacements des pinces crocodiles qui relient l'échantillon à l'alimentation électrique, à un voltmètre et un ampèremètre utilisés pour récupérer la tension et l'intensité du courant qui traverse le circuit. Ainsi, la mesure d'une courbe reliant l'intensité traversant le circuit à la tension permet de remonter à la résistance du jonc en utilisant la loi d'Ohm.

### Exemples de formulations à base de PVDF conducteur de l'invention

**Tableau 1**

| | Composition 1 | Composition 2 | Composition 3 |
|---|---|---|---|
| PVDF1 | 46,25 | 47 | 94 |
| PVDF2 | 46,25 | 47 | |
| Noir de carbone | 7,5 | 6 | 6 |

### Exemples de compositions PVDF conducteur/graphite (% en poids)

**Tableau 2**

| | Exemple 1 | Exemple 2 | Exemple 3 | Exemple comparatif |
|---|---|---|---|---|
| Graphite | 75 % | 75 % | 75% | 75% |
| Composition 1 | 25 % | | | |
| Composition 2 | | 25 % | | |
| Composition 3 | | | 25% | |
| PVDF3 | | | | 25% |

### Résultats des propriétés électriques

**Tableau 3**

| | Résistance d'un jonc produit à un cisaillement de 37 s⁻¹ |
|---|---|
| Exemple 1 | 0,5 Ohm |
| Exemple 2 | 0,6 Ohm |
| Exemple 3 | 0,6 Ohm |
| Exemple comparatif | 2 Ohm |

Les résultats présentés dans le Tableau 3 montrent que la résistance de compositions de Graphite/PVDF conducteur est inférieure à celle des compositions Graphite/PVDF non conducteur.

## Revendications

1. Procédé de fabrication d'une composition comprenant les étapes suivantes :
- mélanger un polymère fluoré thermoplastique à l'état fondu avec une première charge conductrice afin d'obtenir un polymère fluoré conducteur, dans lequel la première charge conductrice constitue de 0,1% à 20% basé sur le poids du polymère thermoplastique conducteur, ce dernier étant un polymère fluoré dont un filament, produit à l'aide d'un rhéomètre capillaire, a une résistance inférieure à 10⁶ Ohm;
- broyer ledit polymère thermoplastique conducteur pour le réduire en poudre;
- mélanger la poudre de polymère fluoré conducteur avec une seconde charge conductrice, le polymère fluoré conducteur étant présent en une quantité allant de 10% à 70%, et la seconde charge conductrice étant présente en une quantité allant de 30% à 90%, basé sur le poids total de la composition.

2. Procédé selon la revendication 1, dans lequel la seconde charge conductrice est le graphite.

3. Procédé selon l'une des revendications 1 ou 2, dans lequel la première charge conductrice est choisie parmi : les polymères conducteurs électroniques, le noir de carbone, les nanotubes de carbone, le graphène, le graphite, les fibres de carbone et leurs mélanges, de préférence la première charge conductrice étant le noir de carbone.

4. Procédé selon l'une des revendications 1 à 3, dans lequel l'étape où la poudre de polymère fluoré conducteur est mélangée avec une seconde charge conductrice est une étape de compoundage effectuée dans une extrudeuse.

5. Procédé selon l'une des revendications 1 à 4, dans lequel la première charge conductrice constitue de 0,1% à 10%, avantageusement de 0,25% à 8%, basé sur le poids du polymère thermoplastique conducteur.

6. Procédé selon l'une des revendications 1 à 5, dans lequel le polymère fluoré conducteur est présent en une quantité allant de 10 à 40%, avantageusement de 15 à 30% et la seconde charge conductrice est présente en une quantité allant de 60 à 90%, avantageusement de 70 à 85% basé sur le poids total de la composition.

7. Procédé selon l'une des revendications 1 à 6, dans lequel le polymère fluoré conducteur est moulu en une poudre ayant un diamètre moyen en volume (Dv50), mesuré par granulométrie laser, allant de 10 µm à 1 mm.

8. Procédé selon l'une des revendications 1 à 7, dans lequel le polymère fluoré conducteur est choisi parmi le polyfluorure de vinylidène homopolymère et les copolymères comprenant des motifs de fluorure de vinylidène et des motifs issus d'au moins un autre comonomère copolymérisable avec le fluorure de vinylidène.

9. Composition comprenant une seconde charge conductrice et des particules d'un polymère fluoré conducteur, ce dernier étant un polymère fluoré dont un filament, produit à l'aide d'un rhéomètre capillaire, a une résistance inférieure à 10⁶ Ohm, **caractérisée en ce que** les particules du polymère fluoré conducteur comprennent une matrice de polymère fluoré dans laquelle est dispersée une première charge conductrice, **en ce que** la seconde charge conductrice est présente en une quantité allant de 30% à 90%, et **en ce que** la première charge conductrice est présente en une quantité de 0,1% à 10%, basé sur le poids de la composition de polymère fluoré conducteur.

10. Composition selon la revendication 9, dans laquelle la seconde charge conductrice est le graphite et/ou la première charge conductrice est choisie parmi : les polymères conducteurs électroniques, le noir de carbone, les nanotubes de carbone, le graphène, le graphite, les fibres de carbone et leurs mélanges, la première charge conductrice étant de préférence le noir de carbone.

11. Composition selon l'une des revendications 9 ou 10, dans laquelle la seconde charge conductrice est présente en une quantité allant de 60 à 90%, avantageusement de 70 à 85% basé sur le poids total de la composition et la première charge conductrice est présente en une quantité de 0,25% à 8% basé sur le poids de la composition de polymère fluoré conducteur.

12. Procédé de fabrication d'une plaque bipolaire, comprenant les étapes suivantes:
∘ préparer une composition selon le procédé selon l'une des revendications 1 à 8 ou fournir une composition selon l'une des revendications 9 à 11;
∘ soumettre la composition à un moulage par injection.

13. Plaque bipolaire obtenue par le procédé selon la revendication 12 ou comprenant la composition selon l'une des revendications 9 à 11.

## Patentansprüche

1. Verfahren zur Herstellung einer Zusammensetzung, das folgende Schritte umfasst:
- Mischen eines fluorhaltigen thermoplastischen Polymers im geschmolzenen Zustand mit einem ersten leitfähigen Füllstoff, um ein leitfähiges fluorhaltiges Polymer zu erhalten, wobei der erste leitfähige Füllstoff bezogen auf das Gewicht des leitfähigen thermoplastischen Polymers 0,1 % bis 20 % ausmacht, wobei es sich bei letzterem um ein fluorhaltiges Polymer handelt, von dem ein Strang, der mithilfe eines Kapillarrheometers erzeugt wird, einen Widerstand von unter 10⁶ Ohm aufweist;
- Zerkleinern des leitfähigen thermoplastischen Polymers, damit es ein Pulver wird;
- Mischen des Pulvers des leitfähigen fluorhaltigen Polymers mit einem zweiten leitfähigen Füllstoff, wobei das leitfähige fluorhaltige Polymer in einer Menge von 10 % bis 70 % vorliegt und der zweite leitfähige Füllstoff in einer Menge von 30 % bis 90 % vorliegt, bezogen auf das Gesamtgewicht der Zusammensetzung.

2. Verfahren nach Anspruch 1, wobei der zweite leitfähige Füllstoff Graphit ist.

3. Verfahren nach einem der Ansprüche 1 oder 2, wobei der erste leitfähige Füllstoff ausgewählt ist aus: elektrisch leitfähigen Polymeren, technischem Ruß, Kohlenstoff-Nanoröhrchen, Graphen, Graphit, Kohlenstofffasern und ihren Gemischen, wobei der erste leitfähige Füllstoff vorzugsweise technischer Ruß ist.

4. Verfahren nach einem der Ansprüche 1 bis 3, wobei der Schritt, in dem das Pulver des leitfähigen fluorhaltigen Polymers mit einem zweiten leitfähigen Füllstoff gemischt wird, ein Compoundierungsschritt ist, der in einem Extruder durchgeführt wird.

5. Verfahren nach einem der Ansprüche 1 bis 4, wobei der erste leitfähige Füllstoff bezogen auf das Gewicht des leitfähigen thermoplastischen Polymers 0,1 % bis 10 %, vorteilhafterweise 0,25 % bis 8 % ausmacht.

6. Verfahren nach einem der Ansprüche 1 bis 5, wobei das leitfähige fluorhaltige Polymer in einer Menge von 10 bis 40 %, vorteilhafterweise 15 bis 30 % vorliegt und der zweite leitfähige Füllstoff in einer Menge von 60 bis 90 %, vorteilhafterweise 70 bis 85 % vorliegt, bezogen auf das Gesamtgewicht der Zusammensetzung.

7. Verfahren nach einem der Ansprüche 1 bis 6, wobei das leitfähige fluorhaltige Polymer zu einem Pulver mit einem per Laserbeugung gemessenen volumetrischen Mediandurchmesser (Dv50) von 10 µm bis 1 mm gemahlen wird.

8. Verfahren nach einem der Ansprüche 1 bis 7, wobei das leitfähige fluorhaltige Polymer ausgewählt ist aus Polyvinylidenfluorid-Homopolymer und Copolymeren, die Vinylidenfluorid-Einheiten und Einheiten umfassen, die von mindestens einem weiteren Comonomer stammen, das mit dem Vinylidenfluorid copolymerisierbar ist.

9. Zusammensetzung, die einen zweiten leitfähigen Füllstoff und Partikel eines leitfähigen fluorhaltigen Polymers umfasst, wobei letzteres ein fluorhaltiges Polymer ist, von dem ein Strang, der mithilfe eines Kapillarrheometers erzeugt wird, einen Widerstand von unter 10⁶ Ohm aufweist, **dadurch gekennzeichnet, dass** die Partikel des leitfähigen fluorhaltigen Polymers eine Matrix aus dem fluorhaltigen Polymer umfassen, in dem ein erster leitfähiger Füllstoff dispergiert ist, dadurch, dass der zweite leitfähige Füllstoff in einer Menge von 30 % bis 90 % vorliegt und dadurch, dass der erste leitfähige Füllstoff in einer Menge von 0,1 % bis 10 % vorliegt, bezogen auf das Gewicht der Zusammensetzung des leitfähigen fluorhaltigen Polymers.

10. Zusammensetzung nach Anspruch 9, wobei der zweite leitfähige Füllstoff Graphit ist und/oder der erste leitfähige Füllstoff ausgewählt ist aus: elektrisch leitfähigen Polymeren, technischem Ruß, Kohlenstoff-Nanoröhrchen, Graphen, Graphit, Kohlenstofffasern und ihren Gemischen, wobei der erste leitfähige Füllstoff vorzugsweise technischer Ruß ist.

11. Zusammensetzung nach einem der Ansprüche 9 oder 10, wobei der zweite leitfähige Füllstoff bezogen auf das Gesamtgewicht der Zusammensetzung in einer Menge von 60 bis 90 %, vorteilhafterweise von 70 bis 85 % vorliegt und der erste leitfähige Füllstoff bezogen auf das Gewicht der Zusammensetzung des leitfähigen fluorhaltigen Polymers in einer Menge von 0,25 % bis 8 % vorliegt.

12. Verfahren zur Herstellung einer Bipolarplatte, das folgende Schritte umfasst:
∘ Herstellen einer Zusammensetzung gemäß dem Verfahren nach einem der Ansprüche 1 bis 8 oder Bereitstellen einer Zusammensetzung nach einem der Ansprüche 9 bis 11;
∘ Spritzgießen der Zusammensetzung.

13. Bipolarplatte, die mit dem Verfahren nach Anspruch 12 erhalten wird oder die Zusammensetzung nach einem der Ansprüche 9 bis 11 umfasst.

## Claims

1. Process for manufacturing a composition, comprising the following steps:
- mixing a molten thermoplastic fluoropolymer with a first conductive filler so as to obtain a conductive fluoropolymer in which the first conductive filler makes up from 0.1% to 20% based on the weight of the conductive thermoplastic polymer, the latter being a fluoropolymer of which a filament, produced using a capillary rheometer, has a resistance of less than 10⁶ ohm;
- milling said conductive thermoplastic polymer to reduce it to powder;
- mixing the conductive fluoropolymer powder with a second conductive filler, the conductive fluoropolymer being present in an amount ranging from 10% to 70%, and the second conductive filler being present in an amount ranging from 30% to 90%, based on the total weight of the composition.

2. Process according to Claim 1, in which the second conductive filler is graphite.

3. Process according to one of Claims 1 and 2, in which the first conductive filler is chosen from: electron-conducting polymers, carbon black, carbon nanotubes, graphene, graphite, carbon fibres and mixtures thereof, the first conductive filler preferably being carbon black.

4. Process according to one of Claims 1 to 3, in which the step in which the conductive fluoropolymer powder is mixed with a second conductive filler is a compounding step performed in an extruder.

5. Process according to one of Claims 1 to 4, in which the first conductive filler makes up from 0.1% to 10%, advantageously from 0.25% to 8%, based on the weight of the conductive thermoplastic polymer.

6. Process according to one of Claims 1 to 5, in which the conductive fluoropolymer is present in an amount ranging from 10% to 40%, advantageously from 15% to 30%, and the second conductive filler is present in an amount ranging from 60% to 90%, advantageously from 70% to 85%, based on the total weight of the composition.

7. Process according to one of Claims 1 to 6, in which the conductive fluoropolymer is milled into a powder having a volume-mean diameter (Dv50), measured by laser particle size analysis, ranging from 10 µm to 1 mm.

8. Process according to one of Claims 1 to 7, in which the conductive fluoropolymer is chosen from polyvinylidene fluoride homopolymer and copolymers comprising vinylidene fluoride units and units derived from at least one other comonomer that is copolymerizable with vinylidene fluoride.

9. Composition comprising a second conductive filler and particles of a conductive fluoropolymer, the latter being a fluoropolymer of which a filament, produced using a capillary rheometer, has a resistance of less than 10⁶ ohm, **characterized in that** the particles of the conductive fluoropolymer comprise a fluoropolymer matrix in which is dispersed a first conductive filler, **in that** the second conductive filler is present in an amount ranging from 30% to 90%, and **in that** the first conductive filler is present in an amount of from 0.1% to 10% based on the weight of the conductive fluoropolymer composition.

10. Composition according to Claim 9, in which the second conductive filler is graphite and/or the first conductive filler is chosen from: electron-conducting polymers, carbon black, carbon nanotubes, graphene, graphite, carbon fibres and mixtures thereof, the first conductive filler preferably being carbon black.

11. Composition according to one of Claims 9 and 10, in which the second conductive filler is present in an amount ranging from 60% to 90%, advantageously from 70% to 85%, based on the total weight of the composition, and the first conductive filler is present in an amount of from 0.25% to 8% based on the weight of the conductive fluoropolymer composition.

12. Process for manufacturing a bipolar plate, comprising the following steps:
∘ preparing a composition according to the process according to one of Claims 1 to 8 or providing a composition according to one of Claims 9 to 11;
∘ subjecting the composition to injection moulding.

13. Bipolar plate obtained via the process according to Claim 12 or comprising the composition according to one of Claims 9 to 11.
